# EUROPÄISCHE PATENTSCHRIFT

(11) **EP 2 153 876 B1**
(45) Veröffentlichungstag und Bekanntmachung des Hinweises auf die Patenterteilung: **28.11.2012**
(21) Anmeldenummer: 09450133.5
(22) Anmeldetag: 22.07.2009
(51) Int. Cl.: B01D 11/02, A23L 1/015, B02B 1/04

(54) **Verfahren zum Entfernen von an Mohnsamen anhaftenden Alkaloiden**
Method for removing alkaloids attached to poppy seeds
Procédé de suppression d'alcaloïdes adhérant à des semences de pavot

(30) Priorität: 22.07.2008 AT 11362008
(43) Veröffentlichungstag der Anmeldung: 17.02.2010
(73) Patentinhaber: VOG AG, 4030 Linz (AT)
(72) Erfinder: Reitbauer, Helmut, 4040 Puchenau (AT); Holzner, Walter, 4072 Alkoven (AT)
(74) Vertreter: Haffner und Keschmann Patentanwälte KG

(56) Entgegenhaltungen:
- DE-A1- 3 524 529
- GB-A- 713 689
- US-A- 2 587 556
- "BfR empfiehlt vorläufige maximale tägliche Aufnahmemenge und einen Richtwert für Morphin in Mohnsamen" 27. Dezember 2005 (2005-12-27), BUNDESINSTUT FÜR RISIKOBEWERTUNG , GESUNDHEITLICHE BEWERTUNG NR. 012/2006 , XP002554100 Seite 12: 3.1.1.4 Mögliche Ursachen für hohe Alkaloidgehalte in Mohnsamen; Seite 40: 3.2 Handlungsrahmen/Massnahmen * Seite 1, Absatz 3 *
- SPROLL, C, PERZ, R C , BUSCHMANN, R, LACHENMEIER, D W: "Guidelines for reduction of morphine in poppy seed intended for food purposes", EUR FOOD RES TECHNOL, vol. 226, 21 September 2006 (2006-09-21), pages 307-310,

## Beschreibung

Die vorliegende Erfindung betrifft ein Verfahren zum Entfernen von an Mohnsamen anhaftenden Alkaloiden, bei welchem die Mohnsamen einem Waschvorgang und einer Trocknung unterworfen werden.

Speisemohn findet überwiegend zur Herstellung von mohnhaltigen Backwaren Verwendung. Ganze Samen von Speisemohn werden zum Bestreuen der Gebäckoberfläche bei Kleingebäck, Brot und ähnlichen Gebäcken verwendet. In verarbeiteter Form wird er für die Herstellung mohnhaltiger feiner Backwaren eingesetzt.

Mohn enthält erhebliche Mengen von Alkaloiden und insbesondere Morphin, wobei die Alkaloide vor allem in der Mohnkapsel zu finden sind, welche die Mohnsamen bei der intakten Pflanze umgibt. Die Mohnsamen werden industriell dadurch gewonnen, dass die Kapsel in speziellen Mühlen gequetscht und aufgerissen wird, sodass die Mohnsamen austreten. Problematisch bei einer solchen Behandlung ist im Gegensatz zu einer aufwendigen händischen Gewinnung, dass das Kapselgewebe erheblich beschädigt wird, und der alkaloidhaltige Saft des Kapselgewebes die freigesetzten Mohnsamen kontaminieren kann. Dies führt dazu, dass die Mohnsamen eine Alkaloid- und insbesondere Morphinkonzentration aufweisen können, welche für den Konsumenten gesundheitlich bedenklich ist, wobei die Konzentrationen zum Teil Werte erreichen, welche Produkte, die solche kontaminierten Mohnsamen enthalten, auch aus betäubungsmittelrechtlicher Sicht problematisch werden lassen. Insbesondere für Kleinkinder kann der Verzehr derartig kontaminierter Lebensmittel ein nicht unerhebliches gesundheitliches Risiko bergen.

Es wurde bereits gezeigt, dass der Morphingehalt von Mohnsamen durch Waschen drastisch reduziert werden kann. Bjerver et al zeigten, dass 40% der Gesamtmorphinmenge von blauen Mohnsamen durch eine Waschung mit leicht gesäuertem Wasser entfernt werden konnte. (Bjerver K, Johnson J, Nilsson A, Schuberth J; 1982. Morphine intake from poppy seed food; J. Pharm. Pharmacol., Vol. 34: 798-801.)

In der DE 35 24 529 A1 wiederum ist ein Verfahren zum Reinigen von Pflanzenteilen von Mohn geoffenbart, bei welchem ganze Mohnkapseln in Lösungen mit einem Gehalt von 4 bis 35 Gew.-% Wasserstoffperoxid in saurem oder basischem Milieu bei Temperaturen bis 90°C und über Zeiträume von bis zu 16 Stunden behandelt wurden. All diesen Versuchen war gemein, dass entweder die Morphinentfernung nicht gründlich genug war oder dass chemische Reagenzien zum Einsatz gelangten, welche für den Einsatz im lebensmitteltechnologischen Bereich nicht geeignet sind.

Aus Sproll et al., Eur Food Res Technol (2007) 226: 307-310 is es bekannt, Mohnsamen mit Flüssigkeit bei über 60°C zu waschen, gefolgt von einer Trocknung bei 40°C.

Es ist somit Aufgabe der vorliegenden Erfindung, ein Verfahren zum Entfernen von an Mohnsamen anhaftenden Alkaloiden anzugeben, mit welchem es gelingt, die Alkaloide quantitativ zu entfernen und gleichzeitig die Verwendung von lebensmitteltechnologisch bedenklichen Reagenzien und ungeeignete Behandlungszeiten zu vermeiden. Zur Lösung dieser Aufgabe besteht das erfindungsgemäße Verfahren darin, dass die Mohnsamen in flächiger Aufbringung definierter Schichtdicke mittels einer Fördereinrichtung kontinuierlich einer Wascheinrichtung zugeführt, kontinuierlich durch diese und danach durch eine Trocknungseinrichtung transportiert werden, dass der Waschvorgang bei einer Temperatur von 50 - 70 °C, insbesondere unter Verwendung eines eine Temperatur von 50 - 70 °C aufweisenden Mediums, insbesondere Wasser oder Dampf/Wassergemischen, durchgeführt wird und dass die Trocknung unter Verwendung von auf eine Temperatur von 50 - 70 °C vortemperierter Luft durchgeführt wird. Dadurch, dass die Mohnsamen in flächiger Aufbringung definierter Schichtdicke mittels einer Fördereinrichtung kontinuierlich einer Wasch- und Trocknungsvorrichtungen zugeführt werden, wird sichergestellt, dass die gesamte Masse der Mohnsamen ausreichend mit Medium durchspült wird, woraufhin die kontrollierte Trocknung der Mohnsamen einen Restfeuchtegehalt des gereinigten Produkts sicherstellt, welcher die Lagerfähigkeit des Mohns gewährleistet. Dadurch, dass für den Waschvorgang ein Medium mit einer Temperatur von 50 - 70 °C und insbesondere Wasser oder ein Dampf/Wassergemische eingesetzt wird, kommt ein Waschmedium zum Einsatz, dessen Temperatur einerseits hoch genug ist, um in vertretbarer Zeit einen quantitativen Übergang der Alkaloide von den Mohnsamen in das Waschmedium zu gewährleisten und dessen Temperatur andererseits niedrig genug ist, um eine Zerstörung der Wertstoffe des Mohns und insbesondere der Lipide, welche im Mohn mit einem Anteil von ungefähr 45% vorliegen, zu vermeiden. Dies gilt auch für die Trocknung, bei welcher die Temperaturen ebenfalls so gewählt werden, dass eine Beschädigung der Wertstoffe des Mohns ausgeschlossen werden kann.

Entscheidend für die Freisetzung der Alkaloide von den Mohnsamen ist, dass die Mohnsamen selbst eine entsprechende Temperatur erreichen. Das Verfahren gemäß der Erfindung ist daher mit Vorteil dahingehend weitergebildet, dass der Waschvorgang bei einer Temperatur der Mohnsamen von 50 - 70 °C, insbesondere unter Verwendung eines Mediums, einer geeigneten Temperatur über eine entsprechende Zeit durchgeführt wird. Unter einer geeigneten Temperatur des Mediums ist hierbei zu verstehen, dass die Temperatur des Mediums mindestens 50 - 70 °C beträgt, wobei auch höhere Temperaturen denkbar sind, wenn die entsprechende Einwirkzeit während des Waschvorgangs entsprechend kurz gehalten wird. In diesem Zusammenhang ist es beispielsweise denkbar, Wasserdampf mit einer weit höheren Temperatur als 70 °C einzusetzen, wobei die entsprechende Zeit der Einwirkung dann relativ kurz gewählt werden muss.

Bevorzugt wird das Verfahren so durchgeführt, dass die Mohnsamen bei sämtlichen Reinigungs- und Trocknungsschritten eine Temperatur, insbesondere Oberflächentemperatur von 70 °C nicht überschreiten.

Im Mohn, wie er dem verarbeitenden Betrieb angeliefert wird, befinden sich häufig noch Reste des Kapselgewebes, aus welchen beim Waschverfahren zusätzlich Alkaloide ausgewaschen werden könnten. Das erfindungsgemäße Verfahren ist deshalb mit Vorteil dahingehend weitergebildet, dass die Mohnsamen der Wascheinrichtung in mechanisch vorgereinigtem Zustand zugeführt werden.

Mit Vorteil ist das erfindungsgemäße Verfahren dahingehend weitergebildet, dass der Waschvorgang in wenigstens zwei Stufen durchgeführt wird. In der ersten Stufe kann hierbei die Entfernung eines Großteils der Morphine und eventuell anderer den Mohnsamen anhaftenden Verunreinigungen bewirkt werden, woraufhin in weiteren Waschstufen der Morphingehalt weiter abgesenkt werden kann, um die erwünschten Morphingehalte, welche sich im niedrigen ppm-Bereich befinden können, zu erreichen.

Durch den oben genannten hohen Fettgehalt der Mohnsamen und insbesondere dadurch, dass den Mohnsamen auch an ihrer Außenseite nicht unerhebliche Mengen an Lipiden anhaften, sind Mohnsamen als ausgesprochen hydrophob zu bezeichnen. Um nun dennoch den Zutritt des Waschmediums zur Oberfläche der Mohnsamen und in die auf den Mohnsamen vorhandenen Vertiefungen sicherzustellen, ist das erfindungsgemäße Verfahren mit Vorteil dahingehend weitergebildet, dass die Mohnsamen vor dem Waschvorgang befeuchtet werden, vorzugsweise mit Waschmedium besprüht werden. Ein übermäßiges Waschen der völlig trockenen Mohnsamen würde aufgrund der Hydrophobizität der Samen zu einem wirkungslosen Durchfließen des Waschmediums oder sogar zu einem Aufschwimmen der Mohnsamen auf dem Waschmedium führen. Wenn nun vor dem eigentlichen Waschvorgang ein kontrolliertes Befeuchten mit geringen Mengen vom Waschmedium vorgenommen wird, wobei insbesondere das Besprühen mit Waschmedium als besonders wirksam angesehen wird, so gelingt es, Zellwandbestandteile der Mohnsamen, welche an der Außenseite der Mohnsamen liegen, quellen zu lassen, sodass eine Desintegration der Lipidschicht erfolgt und dem in den eigentlichen Waschschritten eingesetzten Waschmedium der Zutritt zur Oberfläche der Mohnsamen ermöglicht wird.

Mit Vorteil ist das erfindungsgemäße Verfahren dahingehend weitergebildet, dass das Waschmedium in einer Menge von 1 - 3 l/min pro 1 dm² einer Schicht mit einer Schichtdicke von 25 mm eingebracht, bevorzugt über Düsen auf die Mohnsamen aufgebracht wird, wodurch einerseits sichergestellt ist, dass eine ausreichende Menge Waschmedium auf die Mohnsamen aufgebracht wird, und andererseits ein unnötig hoher Verbrauch an Waschmedium, der in der Folge einen erhöhten Aufwand zur Einengung des kontaminierten Waschmediums zur Folge hätte, vermieden wird.

Mit Vorteil ist das erfindungsgemäße Verfahren dahingehend weitergebildet, dass die Mohnsamen in flächiger Aufbringung mit einer Schichtdicke von < 25 mm dem Waschvorgang bzw. der Trocknung zugeführt werden. Die Wahl einer derartigen Schichtdicke gestattet es, größtmögliche Mengen an Mohnsamen durch die Waschvorrichtung zu fördern, ohne die Effizienz der Entfernung der Alkaloide zu beeinträchtigen. Mit Vorteil ist das erfindungsgemäße Verfahren derart weitergebildet, dass die Mohnsamen während des Waschvorganges mit einer Geschwindigkeit von 0,75 - 1,25 m/min, insbesondere 1 m/min, durch die Wascheinrichtung transportiert werden, was bei Verwendung von handelsüblichen Sprühdüsen zu einer besonders homogenen Aufbringung des Waschmediums führt. In bevorzugter Weise ist das erfindungsgemäße Verfahren dahingehend weitergebildet, dass die Waschzeit 1 - 3 min beträgt.

Um die Lagerfähigkeit des Mohns auch nach dem Waschvorgang gewährleisten zu können, ist es von größter Bedeutung, den Wassergehalt nach dem Waschen durch Trocknen wieder auf den ursprünglichen Wassergehalt zu senken. Als besonders vorteilhaft hat es sich erwiesen, dass die Trocknungszeit zwischen 10 und 20 min beträgt, wobei die Trocknungszeit bei größerer Schichtdicke höher gewählt wird als bei geringere Schichtdicke und dass die Mohnsamen mit einer Geschwindigkeit von 2 - 4 m/min, insbesondere 3 m/min, durch die Trocknungseinrichtung transportiert werden, wobei gemäß einer besonders bevorzugten Ausführungsform der vorliegenden Erfindung die Trocknung im Gegenstrom durchgeführt wird.

Gemäß einer bevorzugten Ausführungsform der Erfindung ist das Verfahren dahingehend weitergebildet, dass die Mohnsamen beim Waschvorgang bzw. bei der Trocknung auf einem Sieb durch die Wasch- bzw. Trocknungseinrichtung transportiert werden, durch welches das mit Alkaloiden belastete Waschmedium abrinnen kann.

Mit Vorteil ist die Erfindung dahingehend weitergebildet, dass das mit Alkaloiden belastete Waschmedium über einen Wärmetauscher zum Aufwärmen der Luft für die Trocknung geführt und danach einer Abwasserbehandlung unterzogen wird, wodurch eine besonders effiziente Nutzung der eingesetzten Energie erreicht wird, wobei gemäß einer weiteren bevorzugten Ausführungsform die Abluft aus der Trocknung über einen Wärmetauscher zum Aufwärmen der Luft für die Trocknung geführt wird, wodurch insgesamt eine besonders ökonomische Verfahrensführung erreicht wird.

Um die Sicherheit des Konsumenten und insbesondere auch die Sicherheit von Kindern beim Verzehr von Mohnsamen zu gewährleisten, ist das erfindungsgemäße Verfahren mit Vorteil dahingehend weitergebildet, dass der Waschvorgang bis zur Verringerung des Morphingehaltes auf < 25 ppm, vorzugsweise < 15 ppm, durchgeführt wird.

Die Erfindung wird nachfolgend anhand eines in der Zeichnung schematisch dargestellten Ausführungsbeispiels näher erläutert.

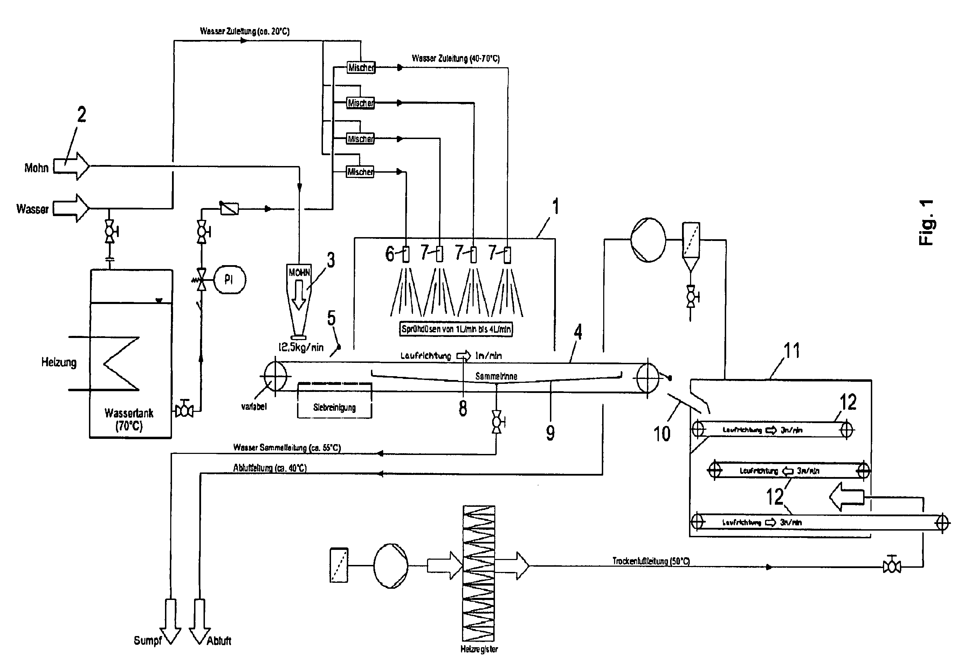

In Fig. 1 ist mit 1 eine Waschvorrichtung zur Durchführung des erfindungsgemäßen Verfahrens dargestellt. Der mit Alkaloiden kontaminierte Mohn wird aus einem Vorratsbehälter 2 zu einer Aufgabevorrichtung 3 gefördert, aus welcher der kontaminierte Mohn mit gleichmäßigen Schichtdicken auf eine Fördereinrichtung 4 verbracht werden kann, welche mit einem Gewebetuch, das die Funktion eines Siebes erfüllt, als Förderband ausgerüstet ist. Mit 5 ist ein Schaber bezeichnet, der eventuelle Unregelmäßigkeiten der Schichtdicke eliminiert.

In der eigentlichen Waschvorrichtung sind Sprüh- und Waschdüsen 6 und 7 angeordnet. Mit Hilfe der Düse 6 kann der zu reinigende Mohn vor dem eigentlichen Waschvorgang befeuchtet werden, wobei hier in bevorzugter Weise eine Sprühdüse zum Einsatz gelangt. Die Düsen 7 dienen nach dem Befeuchten dem eigentlichen Waschen des Mohns, wobei hier Wasser mit unterschiedlichen Temperaturen und in unterschiedlichen Mengen zugeführt werden kann. Der Mohn wird mit der Fördereinrichtung in Richtung des Pfeils 8 mit beispielsweise einer Geschwindigkeit von 1 m/min transportiert, wobei das Waschmedium durch das Gewebeband der Fördereinrichtung 4 in eine Sammelrinne 9 abrinnen kann, in welcher das Waschmedium, das mit Alkaloiden kontaminiert ist, gesammelt wird und in der Folge einer Abwasserbehandlung zugeführt werden kann. Von der Fördereinrichtung 4 gelangt der Mohn über eine Rinne 10 in einen Etagentrockner 11, in welchem der gereinigte feuchte Mohn über in Etagen angeordnete Fördereinrichtungen 12 im Gegenstrom zu Trockenluft, welche beispielsweise eine Temperatur von 50° C aufweisen kann, gefördert wird.

In Tabelle 1 sind die Abreicherungsergebnisse für Morphin und die erhaltenen Werte für die Restfeuchte nach der Anwendung des erfindungsgemäßen Verfahrens angegeben.

**Tabelle 1**

| Nr. | Düse [L/min] | Lufttemp. | | Wassertemp. [°C] | Schichtdicke [g/mm] | Waschzeit [min] | Trockenzeit [min] | Ergebnis | |
|---|---|---|---|---|---|---|---|---|---|
| | | T1 | T2 | | | | | [Restfeuchte %] | [Morphin ppm] |
| 01 | 1 | 58,0 | 53,0 | 60,0 | 210g/21mm | 2 min | 20 min | 7,8 % | 21,0 ppm |
| 02 | 1 | 58,0 | 53,0 | 60,0 | 210g/21mm | 3min | 20 min | 7,1 % | 12,0 ppm |
| 03 | 1 | 60,0 | 55,0 | 70,0 | 210g/21mm | 2 min | 20 min | 6,7 % | 17,0 ppm |
| 04 | 1 | 60,0 | 55,0 | 70,0 | 210g/21 mm | 3min | 20 min | 7,6 % | 13,0 ppm |
| 05 | 1 | 59,0 | 55,0 | 60,0 | 105g/10mm | 1 min | 10 min | 6,4 % | 14,0 ppm |
| 05 | 1 | 59,0 | 55,0 | 60,0 | 105g/10mm | 1 min | 10 min | | |
| 06 | 1 | 60,0 | 55,0 | 60,0 | 105g/10mm | 2 min | 10 min | 6,8 % | 11,0 ppm |
| 06 | 1 | 60,0 | 55,0 | 60,0 | 105g/10mm | 2 min | 10 min | | |
| 07 | 1 | 60,0 | 55,0 | 60,0 | 105g/10mm | 3 min | 10 min | 7,3 % | 5,10 ppm |
| 07 | 1 | 60,0 | 55,0 | 60,0 | 105g/10mm | 3 min | 10 min | | |
| 08 | 3 | 60,0 | 55,0 | 60,0 | 210g/21mm | 2 min | 20 min | 6,1 % | 8,50 ppm |
| 09 | 3 | 60,0 | 55,0 | 70,0 | 210g/21mm | 1,5 min | 20 min | 6,2 % | 12,0 ppm |
| 10 | 3 | 60,0 | 55,0 | 60,0 | 105g/10mm | 1 min | 10 min | 5,1 % | 8,20 ppm |
| 10 | 3 | 60,0 | 55,0 | 60,0 | 105g/10mg | 1 min | 10 min | | |
| 00 | | REFERENZPROBE | | | | | | | 108 ppm |

## Patentansprüche

1. Verfahren zum Entfernen von an Mohnsamen anhaftenden Alkaloiden, bei welchem die Mohnsamen einem Wischvorgang und einer Trocknung unterworfen werden, wobei die Mohnsamen in flächiger Aufbringung definierter Schichtdicke mittels einer Fördereinrichtung kontinuierlich einer Wascheinrichtung zugeführt, kontinuierlich durch diese und danach durch eine Trocknungseinrichtung transportiert werden, der Waschvorgang bei einer Temperatur von 50 - 70 °C, insbesondere unter Verwendung eines eine Temperatur von 50 - 70 °C aufweisenden Mediums, insbesondere Wasser oder Dampf/Wassergemischen, durchgeführt wird und die Trocknung unter Verwendung von auf eine Temperatur von 50 - 70 °C vortemperierter Luft durchgeführt wird.

2. Verfahren nach Anspruch 1, **dadurch gekennzeichnet, dass** der Waschvorgang bei einer Temperatur der Mohnsamen von 50 - 70 °C, insbesondere unter Verwendung eines Mediums einer geeigneten Temperatur über eine entsprechende Zeit durchgeführt wird.

3. Verfahren nach Anspruch 1 oder 2, **dadurch gekennzeichnet, dass** die Mohnsamen der Wascheinrichtung in mechanisch vorgereinigtem Zustand zugeführt werden.

4. Verfahren nach Anspruch 1, 2 oder 3, **dadurch gekennzeichnet, dass** der Waschvorgang in wenigstens zwei Stufen durchgeführt wird.

5. Verfahren nach Anspruch 1 bis 4, **dadurch gekennzeichnet, dass** die Mohnsamen vor dem Waschvorgang befeuchtet werden, vorzugsweise mit Waschmedium besprüht werden.

6. Verfahren nach einem der Ansprüche 1 bis 5, **dadurch gekennzeichnet, dass** das Waschmedium in einer Menge von 1 - 3 l/min pro 1 dm² einer Schicht mit einer Schichtdicke von 25 mm eingebracht, bevorzugt über Düsen auf die Mohnsamen aufgebracht wird.

7. Verfahren nach einem der Ansprüche 1 bis 6, **dadurch gekennzeichnet, dass** die Mohnsamen in flächiger Aufbringung mit einer Schichtdicke von < 25 mm dem Waschvorgang bzw. der Trocknung zugeführt werden.

8. Verfahren nach einem der Ansprüche 1 bis 7, **dadurch gekennzeichnet, dass** die Mohnsamen während des Waschvorganges mit einer Geschwindigkeit von 0,75 - 1,25 m/min, insbesondere 1m/min, durch die Wascheinrichtung transportiert werden.

9. Verfahren nach einem der Ansprüche 1 bis 8, **dadurch gekennzeichnet, dass** die Waschzeit 1 - 3 min beträgt.

10. Verfahren nach einem der Ansprüche 1 bis 9, **dadurch gekennzeichnet, dass** die Trocknungszeit zwischen 10 und 20 min beträgt, wobei die Trocknungszeit bei größerer Schichtdicke höher gewählt wird als bei geringere Schichtdicke.

11. Verfahren nach einem der Ansprüche 1 bis 10, **dadurch gekennzeichnet, dass** die Mohnsamen mit einer Geschwindigkeit von 2 - 4 m/min, insbesondere 3 m/min, durch die Trocknungseinrichtung transportiert werden.

12. Verfahren nach einem der Ansprüche 1 bis 11, **dadurch gekennzeichnet, dass** die Trocknung im Gegenstrom durchgeführt wird.

13. Verfahren nach einem der Ansprüche 1 bis 12, **dadurch gekennzeichnet, dass** die Mohnsamen beim Waschvorgang bzw. bei der Trocknung auf einem Sieb durch die Wasch- bzw. Trocknungseinrichtung transportiert werden.

14. Verfahren nach einem der Ansprüche 1 bis 13, **dadurch gekennzeichnet, dass** das mit Alkaloiden belastete Waschmedium über einen Wärmetauscher zum Aufwärmen der Luft für die Trocknung geführt und danach eine Abwasserbehandlung unterzogen wird.

15. Verfahren nach einem der Ansprüche 1 bis 14, **dadurch gekennzeichnet, dass** die Abluft aus der Trocknung über einen Wärmetauscher zum Aufwärmen der Luft für die Trocknung geführt wird.

16. Verfahren nach einem der Ansprüche 1 bis 15, **dadurch gekennzeichnet, dass** der Waschvorgang bis zur Verringerung des Morphingehaltes auf < 25 ppm, vorzugsweise < 15 ppm, durchgeführt wird.

## Claims

1. A method for removing alkanoids adhering to poppy seeds, in which the poppy seeds are subjected to a washing operation and drying, wherein the poppy seeds are continuously supplied by a conveying device to a washing device in a planar application of defined layer thickness, are continuously transported through the same and, after this, through a drying device, the washing operation is carried out at a temperature of 50 - 70°C, particularly by using a medium having a temperature of 50 - 70°C, in particular water or vapour/water mixtures, and drying is performed using air previously brought to a temperature of 50 - 70°C.

2. A method according to claim 1, **characterized in that** the washing operation is carried out for an appropriate time at a temperature of the poppy seeds of 50 - 70°C, particularly by using a medium having a suitable temperature.

3. A method according to claim 1 or 2, **characterized in that** the poppy seeds are supplied to the washing device in a mechanically pre-cleaned state.

4. A method according to claim 1, 2 or 3, **characterized in that** the washing operation is carried out in at least two stages.

5. A method according to claims 1 to 4, **characterized in that** the poppy seeds are moistened, preferably sprayed with washing medium, prior to the washing operation.

6. A method according to any one of claims 1 to 5, **characterized in that** the washing medium is applied to the poppy seeds, preferably via nozzles, in an amount of 1 - 3 l/min per 1 dm² of a layer having a layer thickness of 25 mm.

7. A method according to any one of claims 1 to 6, **characterized in that** the poppy seeds are supplied to the washing operation and drying respectively in a planar application with a layer thickness of <25 mm.

8. A method according to any one of claims 1 to 7, **characterized in that** the poppy seeds, during the washing operation, are transported through the washing device at a speed of 0.75 - 1.25 m/min, in particular 1 m/min.

9. A method according to any one of claims 1 to 8, **characterized in that** the washing time is 1 to 3 min.

10. A method according to any one of claims 1 to 9, **characterized in that** the drying time ranges between 10 and 20 min, said drying time being selected to be higher with a larger layer thickness than with a smaller layer thickness.

11. A method according to any one of claims 1 to 10, **characterized in that** the poppy seeds are transported through the drying device at a speed of 2 - 4 m/min, in particular 3 m/min.

12. A method according to any one of claims 1 to 11, **characterized in that** drying is performed in counter-flow.

13. A method according to any one of claims 1 to 12, **characterized in that** the poppy seeds, during the washing operation and during drying respectively, are transported on a sieve through the washing and drying devices respectively.

14. A method according to any one of claims 1 to 13, **characterized in that** the washing medium loaded with alkaloids is conducted through a heat exchanger for heating the air for drying and, after this, is subjected to a waste water treatment.

15. A method according to any one of claims 1 to 14, **characterized in that** the exhaust air from drying is conducted through a heat exchanger for heating the air for drying.

16. A method according to any one of claims 1 to 15, **characterized in that** the washing operation is carried out until a reduction of the morphine content down to <25 ppm, preferably <15 ppm.

## Revendications

1. Procédé de suppression d'alcaloïdes adhérant à des semences de pavot, dans lequel les semences de pavots sont soumises à un processus de lavage et à un séchage, les semences de pavot étant amenées de manière continue à un dispositif de lavage à plat avec une épaisseur de couche définie au moyen d'un dispositif de transport, traversant ce dispositif de lavage de manière continue et traversent ensuite un dispositif de séchage, le processus de lavage étant mis en oeuvre à une température de 50 à 70°C, notamment en utilisant un milieu présentant une température de 50 à 70°C, notamment l'eau ou un mélange vapeur/eau, et le séchage étant mis en oeuvre en utilisant de l'air prétempéré à une température de 50 à 70°C.

2. Procédé selon la revendication 1, **caractérisé en ce que** le processus de lavage est mis en oeuvre à une température des semences de pavot de 50 à 70°C, notamment en utilisant un milieu à une température appropriée pendant une durée correspondante.

3. Procédé selon la revendication 1 ou 2, **caractérisé en ce que** les semences de pavot sont amenées au dispositif de lavage à l'état prélavé mécaniquement.

4. Procédé selon la revendication 1, 2 ou 3, **caractérisé en ce que** le processus de lavage est mis en oeuvre en au moins deux étapes.

5. Procédé selon la revendication 1 à 4, **caractérisé en ce que** les semences de pavot sont humidifiées avant le processus de lavage, de préférence aspergées d'un milieu de lavage.

6. Procédé selon l'une des revendications 1 à 5, **caractérisé en ce que** le milieu de lavage est disposé en une quantité de 1 à 3 l/min pour 1 dm² d'une couche ayant une épaisseur de couche de 25 mm, de préférence appliqué sur les semences de pavot par le biais de buses.

7. Procédé selon l'une des revendications 1 à 6, **caractérisé en ce que** les semences de pavot sont amenées au processus de lavage ou au séchage à plat avec une épaisseur de couche inférieure à 25 mm.

8. Procédé selon l'une des revendications 1 à 7, **caractérisé en ce que** les semences de pavot traversent le dispositif de lavage à une vitesse de 0,75 à 1,25 m/min, notamment 1 m/min pendant le processus de lavage.

9. Procédé selon l'une des revendications 1 à 8, **caractérisé en ce que** la durée de lavage est de 1 à 3 minutes.

10. Procédé selon l'une des revendications 1 à 9, **caractérisé en ce que** la durée de séchage se situe entre 10 et 20 minutes, la durée de séchage étant choisie plus longue pour une épaisseur de couche plus grande que pour une épaisseur de couche plus faible.

11. Procédé selon l'une des revendications 1 à 10, **caractérisé en ce que** les semences de pavot traversent le dispositif de séchage à une vitesse de 2 à 4 m/min, notamment 3 m/min.

12. Procédé selon l'une des revendications 1 à 11, **caractérisé en ce que** le séchage est mis en oeuvre à contrecourant.

13. Procédé selon l'une des revendications 1 à 12, **caractérisé en ce que** les semences de pavot, lors du processus de lavage ou lors du séchage, traversent le dispositif de lavage ou de séchage sur un tamis.

14. Procédé selon l'une des revendications 1 à 13, **caractérisé en ce que** le milieu de lavage chargé d'alcaloïdes est guidé à travers un échangeur de chaleur afin de réchauffer l'air en vue du séchage et est ensuite soumis à un traitement des eaux usées.

15. Procédé selon l'une des revendications 1 à 14, **caractérisé en ce que** l'air rejeté issu du séchage est guidé à travers un échangeur de chaleur afin de réchauffer l'air en vue du séchage.

16. Procédé selon l'une des revendications 1 à 15, **caractérisé en ce que** le processus de lavage est mis en oeuvre jusqu'à la réduction de la teneur en morphine à moins de 25 ppm, de préférence moins de 15 ppm.
